# FASCICULE DE BREVET EUROPEEN

(11) **EP 2 405 405 B1**
(45) Date de publication et mention de la délivrance du brevet: **07.09.2016**
(21) Numéro de dépôt: 11172476.1
(22) Date de dépôt: 04.07.2011
(51) Int. Cl.: G07B 17/00, G06K 9/00, G06F 9/445, B07C 3/00

(54) **Procédé de mise à jour du logiciel d'OCR dans les systèmes de traitement d'envois postaux**
Verfahren zum Aktualisieren einer OCR-Software in Postbearbeitungssystemen
Method for updating OCR software in mail processing systems

(30) Priorité: 09.07.2010 FR 1055637
(43) Date de publication de la demande: 11.01.2012
(73) Titulaire: Solystic, 92220 Bagneux (FR)
(72) Inventeur: Miette, Emmanuel, 95210 SAINT GRATIEN (FR); Caillon, Christophe, 91220 BRETIGNY SUR ORGE (FR)
(74) Mandataire: Prugneau, Philippe

(56) Documents cités:
- EP-A1- 1 129 792
- EP-A1- 1 607 143
- EP-A1- 1 840 799
- US-A1- 2005 004 882
- KUBOTA K ET AL: "Technology Trend of Postal Automation", NEC RESEARCH AND DEVELOPMENT, NIPPON ELECTRIC LTD. TOKYO, JP, vol. 40, no. 2, 1 avril 1999 (1999-04-01), pages 127-136, XP008085752, ISSN: 0547-051X

## Description

L'invention concerne de façon générale le traitement d'images numériques pour la reconnaissance d'informations par OCR. L'invention s'applique plus particulièrement au traitement d'images numériques d'articles de courrier postaux pour la reconnaissance automatique d'adresses postales par OCR en vue du tri automatique de ces articles de courrier dans des installations de tri postal.

Par courrier postal, il faut comprendre de façon générale les lettres, les articles plats grand format tels que les magazines et aussi les paquets, colis ou analogues qui peuvent être traités par les opérateurs postaux.

L'invention concerne donc plus particulièrement un procédé de traitement d'images numériques selon lequel on forme une image numérique d'un article comportant une certaine information et on applique sur cette image un traitement de reconnaissance par OCR de ladite information utilisant un OCR. On connaît du document de brevet EP-1129792 un procédé de traitement d'images d'objets postaux dans lequel à partir d'une image d'un objet postal, on reconnaît par OCR une adresse dans l'image et on imprime sur l'objet postal cette adresse sous la forme d'un code barre encodant l'adresse postale de livraison de l'objet postal. Dans l'article intitulé « Technologie Trend of Postal Automation » datant de 1999, il est présenté différents types d'OCR pour la lecture d'adresses postales sur des objets postaux. Dans le document de brevet EP-1840799, on décrit un procédé de lecture d'adresse postale sur des objets postaux dans lequel on utilise un OCR qui est spécialisé en fonction des résultats d'une double binarisation de l'image de chaque objet postal.

L'intégration de capacités de reconnaissance supplémentaires d'adresses postales sur des articles de courrier dans une installation de tri postal existante est toujours très complexe et coûteuse car elle peut remettre en cause les architectures informatiques dans l'installation, les protocoles de communication entre les différents équipements dans l'installation. Cette intégration peut même nécessiter de modifier le format des données transmises entre les équipements et également les applications logicielles pour prendre en compte les nouvelles informations échangées entre les équipements. Très souvent, toutes ces contraintes conduisent les utilisateurs de ces installations à les laisser en l'état plutôt que de les faire évoluer en bénéficiant des dernières évolutions technologiques.

Le but de l'invention est de remédier à cet inconvénient en proposant une solution simple permettant d'intégrer des évolutions technologiques concernant les traitements de reconnaissance par OCR d'information dans une installation de tri postal automatique existante sans remettre en cause les interfaces logiques et physiques de communication dans cette installation.

A cet effet, l'invention a pour objet un procédé pour reconnaître une certaine information sur un article de courrier, selon lequel on forme une image numérique de l'article de courrier comportant ladite information à reconnaître et on applique sur cette image un premier traitement de reconnaissance automatique de ladite information utilisant un OCR primaire, caractérisé par les étapes suivantes :
- application sur cette image, en amont du premier traitement de reconnaissance, d'un autre traitement de reconnaissance de l'information utilisant un OCR secondaire qui est amélioré par rapport audit OCR primaire pour obtenir des résultats additionnels de reconnaissance de ladite information,
- encodage desdits résultats additionnels et incrustation dans ladite image desdits résultats encodés sous une forme reconnaissable par ledit premier traitement de reconnaissance,
- transfert de cette image comportant les résultats encodés au premier traitement de reconnaissance, et extraction et exploitation des résultats encodés dans l'image dans ledit premier traitement de reconnaissance pour faciliter la reconnaissance automatique de ladite information par l'OCR primaire.

Par conséquent, l'idée à la base de l'invention est donc d'utiliser l'image numérique elle-même pour véhiculer vers un traitement d'image primaire (un traitement OCR existant) existant les résultats produits par un traitement d'image secondaire (un traitement OCR additionnel) implémenté en amont de ce traitement primaire pour apporter les dernières évolutions technologiques. La plupart des systèmes existants de reconnaissance d'adresses postales dans les images numériques d'articles de courrier sont prévus pour la reconnaissance et le décodage de codes barres encodant des informations très diverses telles qu'un code postal, les coordonnées du bloc d'adresse de livraison dans l'image, des identifiants d'émetteurs ou destinataires de courrier, etc...

La solution selon l'invention consiste donc à encoder et à incruster les résultats du traitement secondaire de reconnaissance par OCR dans l'image de façon reconnaissable par le traitement primaire de reconnaissance par OCR. Si par exemple, le traitement secondaire permet de reconnaître de façon non équivoque dans une image d'un article de courrier un code postal dans le bloc d'adresse de destinataire, le traitement primaire va immédiatement pouvoir récupérer ce résultat de reconnaissance et le tri de l'article de courrier pourra se poursuivre de façon automatique grâce à l'apport du traitement secondaire. Si maintenant le résultat produit par le traitement secondaire de reconnaissance par OCR est partiel et se limite par exemple à l'identification du bloc d'adresse de destinataire dans l'image numérique, cette information permettra d'enrichir le traitement primaire de reconnaissance pour qu'il puisse reconnaître plus facilement et donc automatiquement l'adresse complète du destinataire, cette reconnaissance complète n'ayant pas forcément pu aboutir avec le seul traitement primaire de reconnaissance par OCR. Il va de soit que dans le contexte de l'invention, les deux traitements de reconnaissance par OCR primaire et secondaire sont de manière générale différents l'un de l'autre en ce que le second présente des perfectionnements par rapport au premier.

Le procédé selon l'invention peut présenter les particularités suivantes :
- lesdits résultats sont incrustés sous la forme d'un code barres reconnaissable par ledit premier traitement.
- ladite information est une adresse postale de livraison de l'article de courrier et dans lequel ledit code barres est incrusté dans l'image au voisinage du bloc d'adresse.
- ledit code barres est incrusté dans l'image numérique sous le bloc d'adresse.
- ledit code barres est incrusté dans l'image à l'intérieur d'un fond blanc rectangulaire.

L'invention s'étend à un dispositif pour reconnaître une certaine information sur un article de courrier tel que défini par la revendication 6.

Le dispositif selon l'invention peut présenter les particularités suivantes :
- le moyen de traitement de données est agencé pour incruster lesdits résultats sous la forme d'un code barres dans l'image numérique.
- le moyen de traitement de données est agencé pour incruster le code barres dans l'image à l'intérieur d'un fond blanc rectangulaire.

L'invention s'étend encore à une installation de traitement du courrier postal comprenant un dispositif tel que défini ci-dessus pour la reconnaissance d'adresses de livraison sur du courrier postal.

Le procédé, le dispositif et l'installation selon l'invention sont décrits ci-après plus en détails en relation avec les dessins.
La figure 1 montre une image numérique d'un article de courrier dans laquelle est incrusté un code barres.
La figure 2 illustre l'architecture d'une installation de tri postal avec un OCR primaire et un OCR secondaire selon l'invention.
La figure 3 illustre le déroulement des traitements OCR selon l'invention.

Le principe de l'invention est donc d'insérer un traitement OCR additionnel (dit « secondaire » par la suite) entre une sortie d'un système d'acquisition d'images numériques et un traitement OCR déjà existant (dit « primaire » par la suite). Il est entendu que ce traitement OCR secondaire possède, dans le cadre de l'invention, des capacités de traitement supplémentaires ou améliorées par rapport à celles du traitement OCR primaire. L'OCR secondaire vient donc en quelque sorte pallier les insuffisances de l'OCR primaire.

Afin de ne pas modifier les interfaces logiques et physiques du système de traitement d'images, on retient en mémoire l'image numérique, le temps que le traitement OCR secondaire effectue sa reconnaissance d'informations dans l'image numérique. Les résultats de la reconnaissance par le traitement OCR secondaire sont incrustés dans l'image numérique, de préférence sous une forme graphique reconnaissable et décodable par le traitement OCR primaire. Quand l'image numérique est reprise par le traitement OCR primaire, celui-ci extrait de l'image numérique les résultats produits par le traitement OCR secondaire ce qui va contribuer à renforcer les capacités de reconnaissance globale du système.

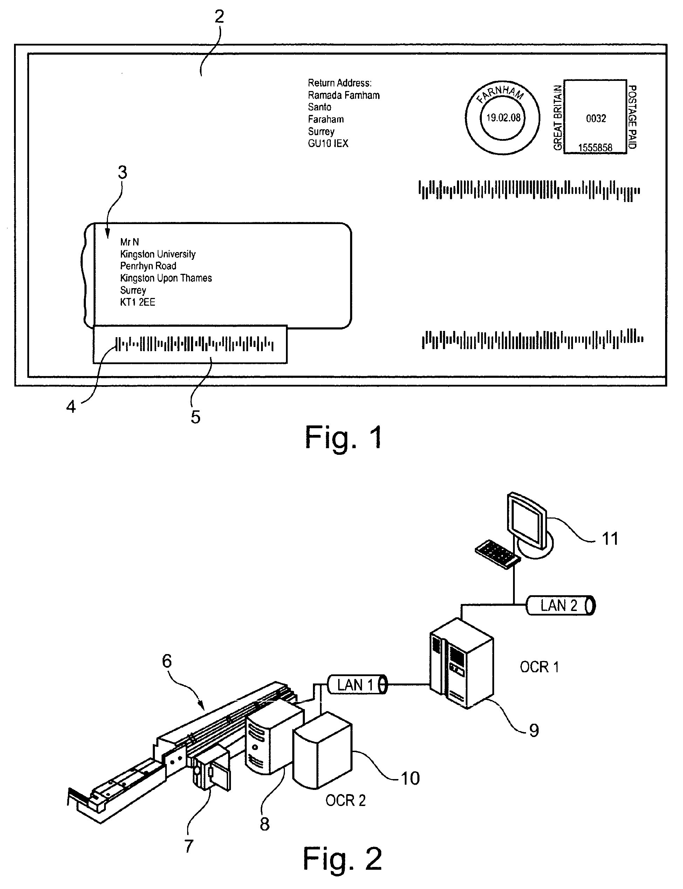

L'application du principe de l'invention à la reconnaissance d'adresses postales est maintenant décrite en relation avec la figure 1.

Sur cette figure 1, on a illustré une image numérique 2 (ici une image numérique en multi-niveaux de gris) d'un article de courrier comportant un bloc d'adresse postale de livraison 3. Sous ce bloc d'adresse est incrusté un code barres 4 dans un fond rectangulaire blanc 5. Ce code barres 4 encode les résultats produits par le traitement OCR secondaire en vue de leur exploitation par le traitement OCR primaire. A la place d'un code barres, les résultats pourraient être incrustés graphiquement sous la forme d'une chaîne de caractères avec une police de caractères facilement lisible par un système OCR. On pourrait aussi avoir un autre type de code graphique, par exemple un code matriciel.

La figure 2 illustre de façon très schématique une architecture réseau d'une installation de tri postal selon l'invention comportant un convoyeur de tri 6 avec des sorties de tri, une caméra 7 disposée sur le trajet des articles de courrier dans le convoyeur 6 pour former une image numérique de chaque article en déplacement dans le convoyeur 6, une unité de stockage de données 8 pour stocker chaque image produite par la caméra 7 et l'envoyer à travers un réseau de communication LAN1 vers un système 9 de reconnaissance d'information d'adresse dans lequel est effectué ici le traitement primaire de reconnaissance par OCR (OCR 1) d'une information d'adresse postale, cette reconnaissance pouvant exploiter une base d'adresses postales de référence non illustrée sur la figure 2.

Le système 9 est également connecté ici par l'intermédiaire d'un autre réseau de communication LAN2 à un système de vidéo-codage distant 11 apte à réaliser un décodage de l'adresse postale avec l'assistance d'un opérateur comme cela est bien connu de l'homme du métier.

Selon l'invention, un traitement secondaire de reconnaissance d'adresses postales par OCR indiqué par OCR 2 est interposé entre le système d'acquisition d'images 7,8 et le système de reconnaissance 9. Cet autre traitement peut être implémenté dans une unité de traitement de données 10 raccordée au réseau de communication LAN1.

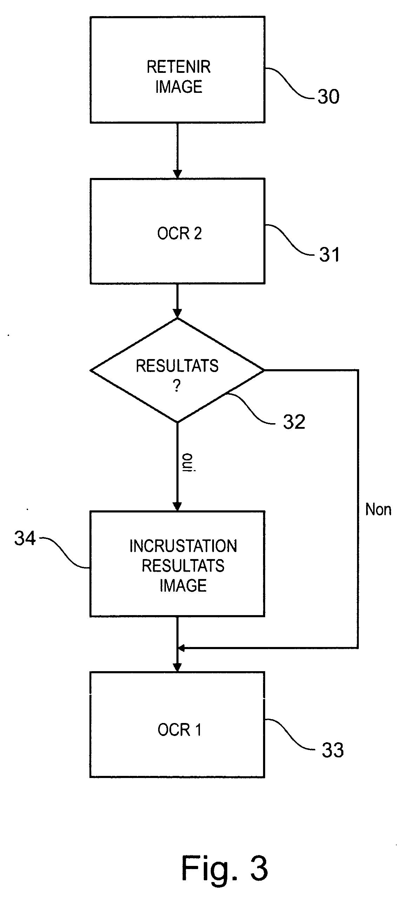

La figure 3 montre l'enchaînement des traitements OCR selon l'invention pour une image numérique.

A l'étape 30, l'unité 8 acquiert une image numérique d'un article de courrier et la retient dans une mémoire tampon le temps d'appliquer le traitement OCR 2 et d'incruster dans l'image les résultats produits par ce traitement.

A l'étape 31, le traitement OCR 2 est donc appliqué sur cette image numérique en mémoire dans l'unité 8. Ce traitement OCR 2 peut inclure diverses phases de reconnaissance : localisation du bloc d'adresse de destinataire - extraction des valeurs des champs du bloc d'adresse - reconnaissance univoque de l'adresse postale par comparaison avec une base d'adresses postales de référence. Les résultats du traitement à l'étape 31 peuvent être partiels ou complets. L'étape 31 peut aussi aboutir à aucun résultat univoque ce qui est contrôlé à l'étape 32 par l'unité 10. Dans le cas où il n'y a pas de résultat à l'étape 32, le processus se poursuit en 33 par la libération de l'image dans l'unité 8 pour son transfert vers le système de reconnaissance 9 où est appliquer le traitement OCR1 sur l'image.

Si on détecte en 32 que le traitement OCR 2 produit un résultat partiel ou complet, ce résultat est encodé par exemple dans un code barres reconnaissable par le traitement OCR 1 lequel code barres est incrusté dans l'image dans un fond rectangulaire blanc comme illustré sur la figure 1. Puis le processus se poursuit par le transfert de l'image vers le système de reconnaissance 9 et l'application du traitement OCR 1.

Dans la mesure où le traitement OCR 2 parvient à localiser le bloc d'adresse de destinataire dans l'image, à l'étape 34 le code barres 4 est incrusté de préférence immédiatement sous le bloc d'adresse de destinataire 3 pour faciliter sa récupération par le traitement OCR 1, le code barres 4 étant par ailleurs facilement identifiable par contraste dans le fond rectangulaire blanc 5.

Le processus se poursuit donc à l'étape 33 par l'application du traitement OCR 1 sur l'image contenant le code barres 4. Comme indiqué plus haut, les traitements OCR actuels de reconnaissance d'adresses postales ont des fonctionnalités d'identification rapide de code barres dans une image et de décodage de celui-ci pour en extraire une information utile pour une exploitation dans un processus de reconnaissance d'adresse postale.

Sur la figure 2, on a illustré deux unités de traitement de données distinctes 9 et 10 mais il est évident le traitement OCR 2 peut être implémenté dans l'unité 9 sans sortir du cadre de l'invention.

Il est possible aussi que le traitement OCR 2 soit apte à reconnaître une valeur faciale d'affranchissement dans l'image, cette valeur d'affranchissement pouvant aussi être encodée dans le code barres 4. Il est encore possible que le code barres 4 encode d'autres informations pouvant être reconnues par le traitement OCR 2 sans sortir du cadre de l'invention.

## Revendications

1. Procédé pour reconnaître une certaine information sur un article de courrier, selon lequel on forme une image numérique (2) de l'article de courrier comportant ladite information à reconnaître et on applique sur cette image un premier traitement (33) de reconnaissance automatique de ladite information utilisant un OCR primaire, **caractérisé en ce qu'**il comprend en outre les étapes suivantes :
- application sur cette image, en amont du premier traitement de reconnaissance, d'un autre traitement (31) de reconnaissance de l'information utilisant un OCR secondaire qui est amélioré par rapport audit OCR primaire pour obtenir des résultats additionnels de reconnaissance de ladite information,
- encodage desdits résultats additionnels et incrustation dans ladite image desdits résultats encodés sous une forme reconnaissable par ledit premier traitement de reconnaissance,
- transfert de cette image comportant les résultats encodés au premier traitement de reconnaissance, et extraction et exploitation des résultats encodés dans l'image dans ledit premier traitement de reconnaissance pour faciliter la reconnaissance automatique de ladite information par l'OCR primaire.

2. Procédé selon la revendication 1, dans lequel lesdits résultats sont incrustés sous la forme d'un code barres reconnaissable par ledit premier traitement.

3. Procédé selon la revendication 2, dans lequel ladite information est une adresse postale de livraison de l'article de courrier et dans lequel ledit code barres est incrusté dans l'image au voisinage du bloc d'adresse.

4. Procédé selon la revendication 3, dans lequel ledit code barres est incrusté dans l'image numérique sous le bloc d'adresse.

5. Procédé selon l'une des revendications 3 ou 4, dans lequel ledit code barres est incrusté dans l'image à l'intérieur d'un fond blanc rectangulaire.

6. Dispositif pour reconnaître une certaine information sur un article de courrier comprenant un système d'acquisition (7,8) d'une image numérique de l'article comportant ladite information à reconnaître et un moyen de traitement de données (9,10) apte à effectuer un premier traitement de reconnaissance automatique
de ladite information utilisant un OCR primaire, **caractérisée en ce que** le moyen de traitement de données (9,10) est apte à effectuer en outre lesdits traitements suivants :
- un second traitement (31) de reconnaissance de l'information utilisant un OCR secondaire qui est amélioré par rapport audit OCR primaire pour obtenir des résultats additionnels de reconnaissance de ladite information,
- un encodage desdits résultats additionnels et une incrustation dans ladite image desdits résultats encodés sous une forme reconnaissable par ledit premier traitement de reconnaissance,
- un transfert de cette image comportant les résultats encodés au premier traitement de reconnaissance, et une extraction et une exploitation des résultats encodés dans l'image dans ledit premier traitement de reconnaissance pour faciliter la reconnaissance automatique de ladite information par l'OCR primaire.

7. Dispositif selon la revendication 6, dans lequel le moyen de traitement de données est agencé pour incruster lesdits résultats sous la forme d'un code barres dans l'image numérique.

8. Dispositif selon la revendication 7, dans lequel le moyen de traitement de données est agencé pour incruster le code barres dans l'image à l'intérieur d'un fond blanc rectangulaire.

9. Installation de tri du courrier postal comprenant un dispositif selon l'une des revendications 6 à 8 pour la reconnaissance d'informations d'adresses de livraison sur du courrier postal.

## Patentansprüche

1. Verfahren zum Erkennen einer gewissen Information auf einem Postartikel, gemäß dem ein digitales Bild (2) des Postartikels gebildet wird, das die zu erkennende Information aufweist, und auf dieses Bild eine erste Verarbeitung (33) zur automatischen Erkennung der Information unter Verwendung einer primären optischen Zeichenerkennung (Optical Character Recognition, OCR) angewendet wird, **dadurch gekennzeichnet, dass** es außerdem die folgenden Schritte umfasst:
- Anwendung einer anderen Verarbeitung (31) zur Erkennung der Information auf dieses Bild, vor der ersten Verarbeitung zur Erkennung, unter Verwendung einer sekundären OCR, welche bezüglich der primären OCR verbessert ist, um zusätzliche Ergebnisse zur Erkennung der Information zu erhalten,
- Codierung der zusätzlichen Ergebnisse und Einbringen der codierten Ergebnisse in das Bild in einer durch die erste Verarbeitung zur Erkennung erkennbaren Form,
- Übertragung dieses die codierten Ergebnisse aufweisenden Bildes zu der ersten Verarbeitung zur Erkennung und Extraktion und Auswertung der codierten Ergebnisse in dem Bild bei der ersten Verarbeitung zur Erkennung, um die automatische Erkennung der Information durch die primäre OCR zu erleichtern.

2. Verfahren nach Anspruch 1, wobei die Ergebnisse in der Form eines Strichcodes eingebracht werden, der von der ersten Verarbeitung erkennbar ist.

3. Verfahren nach Anspruch 2, wobei die Information eine Post-Lieferadresse des Postartikels ist und wobei der Strichcode in der Nähe des Adressblocks in das Bild eingebracht wird.

4. Verfahren nach Anspruch 3, wobei der Strichcode unter dem Adressblock in das digitale Bild eingebracht wird.

5. Verfahren nach einem der Ansprüche 3 oder 4, wobei der Strichcode im Inneren eines rechteckigen weißen Feldes in das Bild eingebracht wird.

6. Vorrichtung zum Erkennen einer gewissen Information auf einem Postartikel, welche ein System zur Erfassung (7, 8) eines digitalen Bildes des Artikels, das die zu erkennende Information aufweist, und ein Datenverarbeitungsmittel (9, 10) umfasst, das geeignet ist, eine erste Verarbeitung zur automatischen Erkennung der Information unter Verwendung einer primären OCR durchzuführen, **dadurch gekennzeichnet, dass** das Datenverarbeitungsmittel (9, 10) geeignet ist, außerdem die folgenden Verarbeitungen durchzuführen:
- eine zweite Verarbeitung (31) zur Erkennung der Information unter Verwendung einer sekundären OCR, welche bezüglich der primären OCR verbessert ist, um zusätzliche Ergebnisse zur Erkennung der Information zu erhalten,
- eine Codierung der zusätzlichen Ergebnisse und ein Einbringen der codierten Ergebnisse in das Bild in einer durch die erste Verarbeitung zur Erkennung erkennbaren Form,
- eine Übertragung dieses die codierten Ergebnisse aufweisenden Bildes zu der ersten Verarbeitung zur Erkennung und eine Extraktion und eine Auswertung der codierten Ergebnisse in dem Bild bei der ersten Verarbeitung zur Erkennung, um die automatische Erkennung der Information durch die primäre OCR zu erleichtern.

7. Vorrichtung nach Anspruch 6, wobei das Datenverarbeitungsmittel dazu eingerichtet ist, die Ergebnisse in der Form eines Strichcodes in das digitale Bild einzubringen.

8. Vorrichtung nach Anspruch 7, wobei das Datenverarbeitungsmittel dazu eingerichtet ist, den Strichcode im Inneren eines rechteckigen weißen Feldes in das Bild einzubringen.

9. Sortieranlage für Postsendungen, welche eine Vorrichtung nach einem der Ansprüche 6 bis 8 zur Erkennung von Informationen von Lieferadressen auf Postsendungen umfasst.

## Claims

1. A method of recognizing certain information on a mailpiece, in which method a digital image (2) is taken of the mailpiece, which image includes said information to be recognized, and first recognition processing (33) is applied to said image for the purpose of recognizing said information using primary OCR, said method being **characterized in that** it further comprises the following steps:
· applying other recognition processing (31) to said image, upstream from the first recognition processing, for the purpose of recognizing the information using secondary OCR that is improved relative to said primary OCR so as to obtain additional results for recognizing said information;
· encoding said additional results and incrusting into said image said results as encoded in a form recognizable by said first recognition processing; and
· transferring said image including the results encoded in the first recognition processing, and extract and use the results encoded in the image in said first recognition processing for the purpose of facilitating the recognition of said information by the primary OCR.

2. A method according to claim 1, wherein said results are incrusted in the form of a bar code recognizable by said first processing.

3. A method according to claim 2, wherein said information is a delivery postal address of the mailpiece and wherein said bar code is incrusted in the image in the vicinity of the address block.

4. A method according to claim 3, wherein said bar code is incrusted in the digital image under the address block.

5. A method according to claim 3 or 4, wherein said bar code is incrusted in the image within a rectangular white background.

6. Apparatus for recognizing certain information on a mailpiece, which apparatus comprises:
an acquisition system (7, 8) for acquiring a digital image of the mailpiece, which image includes said information to be recognized; and data-processing means (9, 10) suitable for performing first automatic recognition processing for the purpose of recognizing said information using primary OCR, said apparatus being **characterized in that** the data-processing means (9, 10) is suitable for performing the following processing operations:
· second recognition processing (31) for recognizing the information using secondary OCR that is improved relative to said primary OCR so as to obtain additional results for recognizing said information;
· encoding said additional results and incrusting into said image said results as encoded in a form recognizable by said first recognition processing; and
· transferring said image including the results encoded in a first recognition processing, and extract and use the results encoded in the image in said first recognition processing for the purpose of facilitation the recognition of said information by the primary OCR.

7. Apparatus according to claim 6, wherein said data-processing means is arranged to incrust said results in the form of a bar code in the digital image.

8. Apparatus according to claim 7, wherein the data-processing means is arranged to incrust the bar code in the image within a rectangular white background.

9. A postal sorting installation comprising an apparatus according to claim 6 to 8 for recognizing delivery address information on mail.
